# EUROPEAN PATENT SPECIFICATION

(11) **EP 3 518 319 B1**
(45) Date of publication and mention of the grant of the patent: **07.06.2023**
(21) Application number: 16916747.5
(22) Date of filing: 20.09.2016
(51) Int. Cl.: H01M 50/209, H01M 50/503, H01M 50/583, H01H 85/08, H01H 85/10, H01H 37/76

(54) **BATTERY PACK AND ELECTRICALLY CONDUCTIVE MEMBER**
AKKU UND ELEKTRISCH LEITFÄHIGES ELEMENT
BLOC-BATTERIE ET ÉLÉMENT ÉLECTROCONDUCTEUR

(43) Date of publication of application: 31.07.2019
(73) Proprietor: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: SHIMIZU, Norio, Tokyo 105-8001 (JP); UCHIDA, Toshinori, Tokyo 105-8001 (JP); SEKINO, Masahiro, Tokyo 105-8001 (JP); YASUI, Hideaki, Tokyo 105-8001 (JP); KOMABAYASHI, Otoya, Tokyo 105-8001 (JP)
(74) Representative: AWA Sweden AB
(86) International application number: PCT/JP2016/077725
(87) International publication number: WO 2018/055676

(56) References cited:
- WO-A1-2010/131780
- GB-A- 2 330 252
- JP-A- 2010 257 944
- JP-A- 2012 138 239
- JP-A- 2013 073 929
- JP-A- 2013 196 932
- JP-A- 2013 219 052
- JP-A- 2015 507 819
- JP-A- 2016 131 094
- KR-A- 20140 110 190

## Description

### FIELD

Embodiments of the present invention relate generally to a battery pack.

### BACKGROUND

Conventionally, battery packs are known, which include a plurality of batteries, a connection member such as a connector that receives and transmits electric power from and to an external device, and a conductive member that connects the batteries and the connection member. When overcurrent flows, the conductive member is fused.

Conventionally, however, it is difficult to determine from which one of both lateral ends of the conductive member fusing starts, for example. Thus, it is preferable to provide a battery pack with a novel configuration that can start fusing from a particular end of the conductive member.

The invention is set out in the appended set of claims. According to an embodiment, in general, a battery pack includes, for example, battery cells, a connection member, a conductive member, and a heat transfer part. The battery cells each include an electrode terminal. The conductive member includes a first terminal of a plate shape connected to the connection member; a second terminal of a plate shape connected to the electrode terminal; and a bridge of a plate shape that extends across the first terminal and the second terminal and is fused by heat including self-generated heat. The heat transfer part is located in a first part being from the first terminal to the bridge of the conductive member, and transfers heat so that a first end being a lateral end of the bridge becomes higher in temperature than a second end opposite the first end.

### BRIEF DESCRIPTION OF DRAWINGS

FIG. 1 is a schematic, exemplary perspective view of a battery pack according to a first embodiment, illustrating the battery pack placed on a mount.
FIG. 2 is a schematic, exemplary exploded perspective view of the battery pack and a fixing structure of the first embodiment.
FIG. 3 is a schematic, exemplary perspective view of the battery pack of the first embodiment.
FIG. 4 is a schematic, exemplary perspective view of the battery pack of the first embodiment, illustrating the battery pack with a lid member detached.
FIG. 5 is a schematic, exemplary plan view of the battery pack of the first embodiment, with the lid member is detached.
FIG. 6 is a schematic, exemplary side view of part of the battery pack of the first embodiment.
FIG. 7 is a schematic, exemplary sectional view of part of the battery pack of the first embodiment.
FIG. 8 is a schematic, exemplary perspective view of a conductive member of the battery pack of the first embodiment.
FIG. 9 is a schematic, exemplary plan view of the conductive member of the battery pack of the first embodiment.
FIG. 10 is a schematic, exemplary plan view of a part of the battery pack of the first embodiment, with a lid member detached.
FIG. 11 is a schematic, exemplary perspective view of part of inside a housing of the battery pack of the first embodiment, while a nut is supported by a support.
FIG. 12 is a schematic, exemplary perspective view of part of inside the housing of the battery pack of the first embodiment, with the nut removed from the support.
FIG. 13 is a schematic, exemplary perspective view of a nut of the battery pack of the first embodiment.
   The following embodiments are not according to the invention and are preset for illustrative purpose only.
FIG. 14 is a schematic, exemplary plan view of a conductive member of a battery pack of a second embodiment.
FIG. 15 is a schematic, exemplary perspective view of a conductive member of a battery pack of a third embodiment.
FIG. 16 is a schematic, exemplary front view of the conductive member of the battery pack of the third embodiment.
FIG. 17 is a schematic, exemplary perspective view of part of inside a housing of a battery pack of a fourth embodiment, with a lid member detached.
FIG. 18 is a schematic, exemplary plan view of a conductive member and a radiator of the battery pack of the fourth embodiment.
FIG. 19 is a schematic, exemplary sectional view of the conductive member and the radiator of the battery pack of the fourth embodiment.
FIG. 20 is a schematic, exemplary perspective view of a part of a battery pack of a fifth embodiment, with a lid member detached.
FIG. 21 is a schematic, exemplary perspective view of an electrically conducive member of a battery pack of a sixth embodiment.
FIG. 22 is a schematic, exemplary perspective view of a conductive member of a battery pack of a seventh embodiment.
FIG. 23 is a schematic, exemplary perspective view of part of a battery pack of an eighth embodiment, with a lid member detached.

### DETAILED DESCRIPTION

Hereinafter, exemplary embodiments of the present invention will be described. The second to eights embodiments are not according to the invention and are preset for illustrative purpose only. Configurations of the following embodiments, and actions and results (effects) attained by the configurations are merely exemplary.

The embodiments disclosed below include similar or same elements. In the following, the similar or same elements are denoted by the same reference numerals, and repetitive explanations are omitted. In the following figures, directions are defined for the sake of convenience. An X direction is along the length of a housing 11 and the width of a battery cell 12. A Y direction is along the lateral of the housing 11 and along the thickness of the battery cell 12. A Z direction is along the height of the housing 11 and the height of the battery cell 12. The X direction, the Y direction, and the Z direction are orthogonal to one another.

### First Embodiment

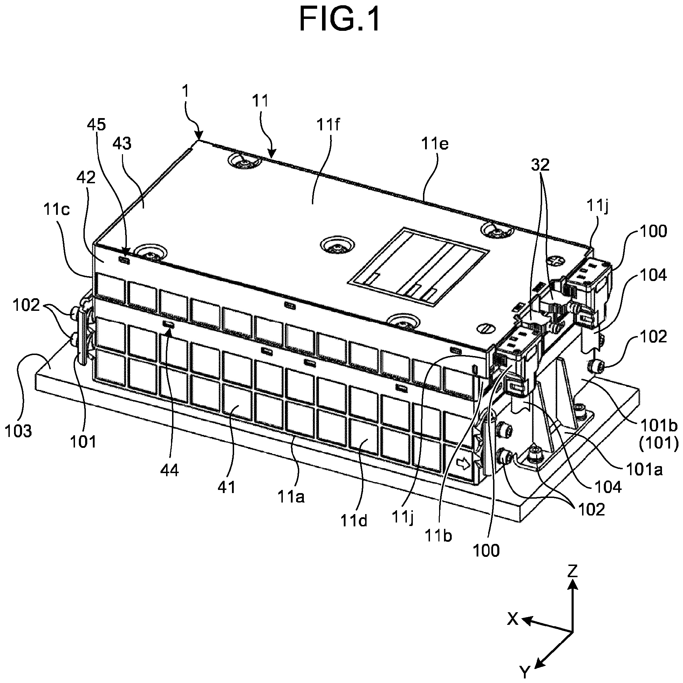

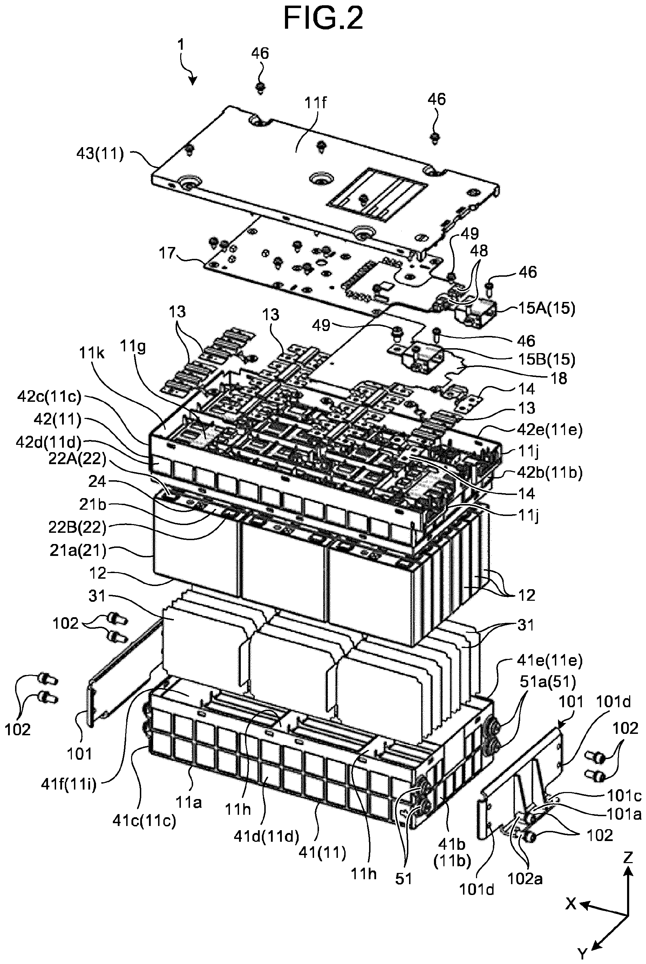

As illustrated in FIG. 1 and FIG. 2, the battery pack 1 includes, for example, the housing 11, battery cells 12, conductive members 13 and 14, connectors 15A and 15B, and a circuit board 17. The battery cells 12, the conductive members 13 and 14, the connectors 15A and 15B, and the circuit board 17 are accommodated in the housing 11. The battery cells 12 are electrically connected to one another through the conductive members 13. The battery cells 12, that is, the battery pack 1 can output electric power to an external connector 100 (connection member) via the conductive member 14 and the connectors 15A and 15B. The battery pack 1 can be fixed to a mount 103 with brackets 101 and bolts 102. One of the connectors 15A and 15B is a positive-electrode connector, and the other of the connectors 15A and 15B is a negative-electrode connector. Hereinafter, the connectors 15A and 15B may be generally referred to as a connector 15. The battery pack 1 may also be referred to as a battery module or a battery device. The housing 11 may also be referred to as a case or a container. The battery cells 12 may be referred to as cells or batteries. The connector 15 is an exemplary connection member and an object to connect.

Each battery cell 12 is, for example, configured as a lithium ion secondary battery. The battery cell 12 may also be another battery such as a nickel hydrogen battery, a nickel cadmium battery, or a lead storage battery.

As illustrated in FIG. 2, the battery cells 12 have a thin flat rectangular parallelepiped shape in one direction (for example, Y direction). The battery cells 12 each include a housing 21, a positive-electrode terminal 22A, a negative-electrode terminal 22B, and a valve 24. The housing 21 contains an electrode and an electrolyte solution, which are not illustrated. As an example, the electrode may be formed by winding a positive-electrode sheet and a negative-electrode sheet being generator elements in a spiral manner via a separator. As another example, the electrode may be formed by laminating a positive-electrode sheet and a negative-electrode sheet via a separator. The positive-electrode terminal 22A and the negative-electrode terminal 22B are connected to the positive-electrode sheet and the negative-electrode sheet of the electrode, respectively. Hereinafter, the positive-electrode terminal 22A and the negative-electrode terminal 22B may be generally referred to as an electrode terminal 22. The electrode terminal 22 is an exemplary object to connect.

The housing 21 has, for example, a thin flat rectangular parallelepiped shape in one direction (for example, Y direction). The housing 21 is formed of a metal material (for example, aluminum, aluminum alloy, or stainless) or a synthetic resin material. The housing 21 is an assembly of a container 21a and a lid 21b. The container 21a has a substantially parallelepiped box shape with an open top. The container 21a stores electrodes and an electrolyte solution. The lid 21b covers the open top of the container 21a. The housing 21 may also be referred to as a container.

The positive-electrode terminal 22A and the negative-electrode terminal 22B are mounted on the lid 21b, and project from the outer surface of the lid 21b. The positive-electrode terminal 22A and the negative-electrode terminal 22B are spaced apart from each other in the X direction, i.e., in the longitudinal direction of the lid 21b. The positive-electrode terminal 22A and the negative-electrode terminal 22B are both formed of an electrically conductive material.

The valve 24 is located between the positive-electrode terminal 22A and the negative-electrode terminal 22B on the lid 21b. The valve 24 is opened to lower the pressure inside the housing 21 when the pressure exceeds a threshold.

The battery cells 12 are, for example, arranged in three rows in the housing 11. The battery cells 12 are disposed so that the outer surface of the lid 21b faces the same direction (for example, Z direction) and the long side of the lid 21b lies in the same direction (for example, X direction). The battery cells 12 are electrically connected in series or in parallel through the conductive members 13. For example, The conductive members 13 are formed of an electrically conductive material such as aluminum. The conductive member 13 may also be referred to as a bus bar, a connection member, and a coupling member.

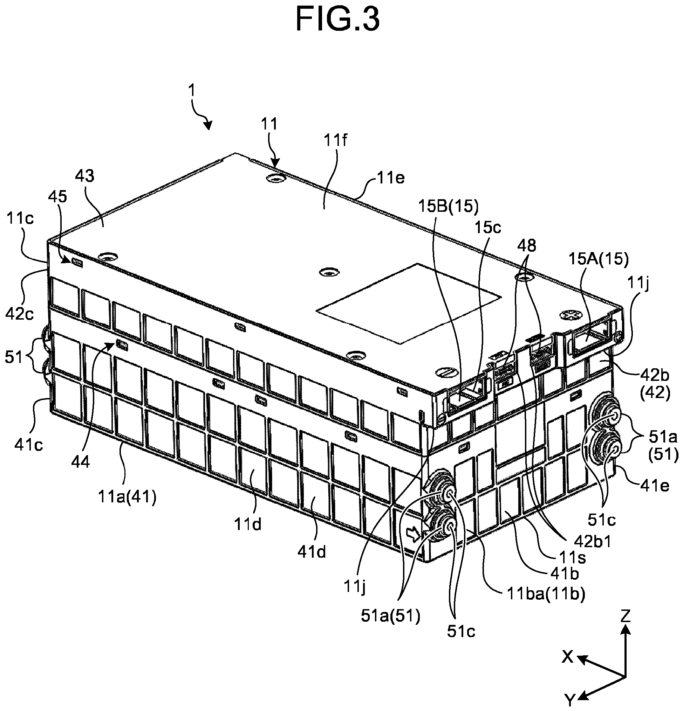

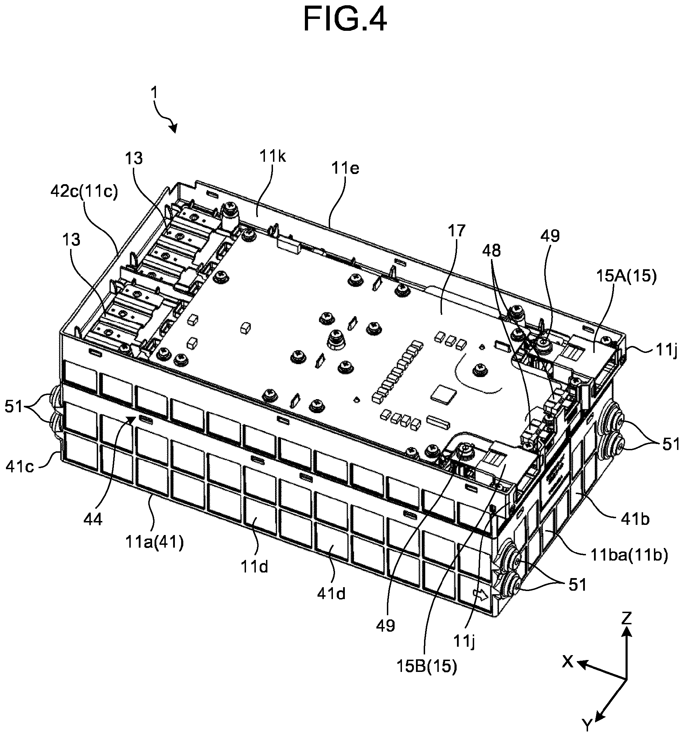

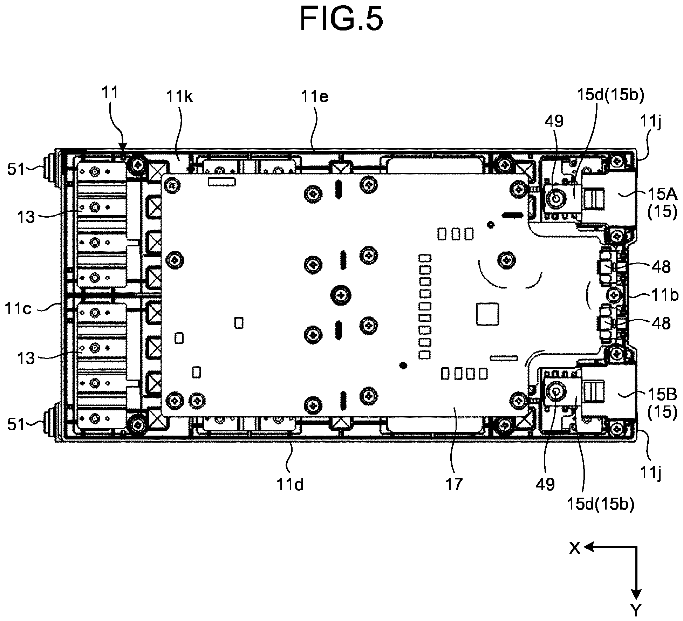

As illustrated in FIG. 3, the exterior of the housing 11 is long parallelepiped in one direction (X direction). As illustrated in FIG. 2 to FIG. 5, the housing 11 includes a plurality of walls including a bottom wall 11a, end walls 11b and 11c, side walls 11d and 11e, a top wall 11f, an intermediate wall 11g (see FIG. 2), and partition walls 11h (see FIG. 2). The end wall 11b is an exemplary outer wall, and the bottom wall 11a is an exemplary outer wall.

The bottom wall 11a has a quadrangular (for example, rectangular) plate shape. The bottom wall 11a extends along an XY plane. The outer surface of the bottom wall 11a is planar.

The end walls 11b and 11c have a quadrangular (for example, rectangular) plate shape, and are connected to a longitudinal (X-directional) end of the bottom wall 11a. The end walls 11b and 11c extend in a direction intersecting with the bottom wall 11a (for example, orthogonal direction, YZ plane). The end walls 11b and 11c are substantially in parallel with each other at an interval in the longitudinal direction (X direction) of the bottom wall 11a.

The side walls 11d and 11e have a quadrangular (for example, rectangular) plate shape, and are connected to a lateral end (Y-directional) of the bottom wall 11a. The side walls 11d and 11e extend in a direction intersecting with the bottom wall 11a (for example, orthogonal direction, XZ plane). The side walls 11d and 11e are provided substantially in parallel with each other at an interval in the lateral direction (Y direction) of the bottom wall 11a. The side walls 11d and 11e are connected to the adjacent end walls 11b and 11c.

The top wall 11f has a quadrangular (for example, rectangular) plate shape. The top wall 11f is connected to the ends of the end walls 11b and 11c and the side walls 11d and 11e opposite the bottom wall 11a. The top wall 11f is placed with an interval from the bottom wall 11a in the thickness direction (Z direction). The top wall 11f extends substantially in parallel with the bottom wall 11a.

The intermediate wall 11g has a quadrangular (for example, rectangular) plate shape. The intermediate wall 11g is placed between the bottom wall 11a and the top wall 11f. The intermediate wall 11g extends substantially in parallel with the bottom wall 11a and the top wall 11f. The intermediate wall 11g is connected to the inner surfaces of the end walls 11b and 11c and the side walls 11d and 11e.

The partition walls 11h have a quadrangular (for example, rectangular) plate shape. The partition walls 11h are placed between the bottom wall 11a and the intermediate wall 11g, and are connected to the bottom wall 11a. The partition walls 11h are aligned with the end walls 11b and 11c. The partition walls 11h are substantially in parallel with the end walls 11b and 11c. The partition walls 11h are aligned (for example, in parallel), facing each other. The interval among the partition walls 11h is substantially constant.

The housing 11A includes a chamber 11i (see FIG. 2) surrounded by the bottom wall 11a, the end walls 11b and 11c, the side walls 11d and 11e, and the intermediate wall 11g. The chamber 11i is partitioned into areas (chambers) by the partition wall 11h and a spacer 31, to accommodate a single battery cell 12 in each area.

The housing 11 are provided with two projections 11j on the end wall 11b. The two projections 11j are located at the end of the end wall 11b closer to the top wall 11f. The projections 11j extend across the end wall 11b and the top wall 11f. The projections 11j projects (overhangs) to the outside of an outer surface 11ba of the end wall 11b. The two projections 11j are spaced apart from each other in the lateral direction (Y direction) of the housing 11. The connector 15 is mounted on each of the projections 11j. The projection 11j may also be referred to as an overhang.

The housing 11 is formed of an insulating synthetic resin material (for example, modified polyphenylene ether (PPE), and perfluoroalkoxy alkane (tetrafluoroethylene-perfluoroalkyl vinyl ether copolymer) (PFA), and the like). The synthetic resin material of the housing 11 may also be thermoplastic resin. Examples of the synthetic resin material of the housing 11 may include crystalline resin such as olefin resin including polyethylene (PE), polypropylene (PP), polymethylpentene (PMP), and the like; polyester-based resin including polyethylene terephthalate (PET), polybutylene terephthalate (PBT), polyethylene naphthalate (PEN), and the like; polyoxymethylene (POM) resin; polyamide-based resin including polyamide (PA) 6, PA 66, PA 12, and the like; polyphenylene sulfide (PPS) resin; and liquid crystal polymer (LCP) resin, as well as alloy resins of these resins. Alternatively, the synthetic resin material of the housing 11 may be amorphous resin such as polystyrene (PS), polycarbonate (PC), polycarbonate/acrylonitrile butadiene styrene (PC/ABS), acrylonitrile butadiene styrene (ABS), acrylonitrile styrene copolymer (AS), modified polyphenylene ether (PPE), polyethersulfone (PES), polyetherimide (PEI), and polysulfone (PSF), as well as alloy resins of these resins.

As illustrated in FIG. 2 and other drawings, the housing 11 is an assembly of a plurality of members, specifically, a container 41, an intermediate member 42, and a lid member 43. The intermediate member 42 is placed on and coupled to one end of the container 41. The lid member 43 is placed on and coupled to one end of the intermediate member 42. The chamber 11i is surrounded by the container 41 and the intermediate member 42.

The container 41 includes the bottom wall 11a, end walls 41b and 41c being part of the end walls 11b and 11c, side walls 41d and 41e being part of the side walls 11d and 11e, and the partition wall 11h. The container 41 is provided with an opening 41f (depression, space) surrounded by the bottom wall 11a, the end walls 41b and 41c, and the side walls 41d and 41e. The opening 41f forms at least part of the chamber 11i.

The intermediate member 42 includes end walls 42b and 42c being part of the end walls 11b and 11c, side walls 42d and 42e being part of the side walls 11d and 11e, the intermediate wall 11g, and at least part of the projection 11j. The intermediate member 42 covers the opening 41f of the container 41. The intermediate wall 11g is connected to middle parts of the end walls 42b and 42c and the side walls 42d and 42e in the thickness direction (Z direction, height direction of the housing 11) of the bottom wall 11a.

The lid member 43 includes the top wall 11f and at least part of the projection 11j.

The container 41 and the intermediate member 42 are mechanically joined together by a coupler 44, and the intermediate member 42 and the lid member 43 are mechanically joined together by a coupler 45. In other words, the container 41 and the lid member 43 are joined via the intermediate member 42. The coupler 44 joins the intermediate member 42 and the container 41 by catching the end walls 41b and 41c and the side walls 41d and 41e of the container 41 by tabs on the end walls 42b and 42c and the side walls 42d and 42e of the intermediate member 42. The coupler 45 also joins the lid member 43 and the intermediate member 42 by catching the side walls 42d and 42e of the intermediate member 42a by tabs on the lid member 43.

In the housing 11 configured as above, as described above, the battery cells 12 are contained in the opening 41f of the container 41 partially defining the chamber 11i. The insulating spacer 31 is interposed between every two adjacent battery cells 12. The spacer 31 separates the two adjacent battery cells 12. The spacer 31 is, for example, a sheet formed of an insulating material. The spacer 31 may also be referred to as a partition wall (wall).

The positive-electrode terminal 22A and the negative-electrode terminal 22B of each battery cell 12 project toward the top wall 11f of the intermediate wall 11g through a through hole (opening) in the intermediate wall 11g.

The housing 11K is provided with a chamber 11k (space) between the intermediate wall 11g and the top wall 11f, to accommodate the conductive members 13 and 14, the connectors 15A and 15B, the circuit board 17, and a plate member 18. For example, the conductive members 13 and 14 are welded to the electrode terminal 22 (positive-electrode terminal 22A, negative-electrode terminal 22B) of the battery cell 12. The connectors 15A and 15B are coupled to the intermediate member 42 with fasteners 46 such as screws. The circuit board 17 is coupled to the lid member 43 with fasteners 46 such as screws.

The circuit board 17 is, for example, a print circuit board (PCB). Electronic components are mounted on the circuit board 17 on which a wiring pattern is formed. The circuit board 17 is electrically connected to the conductive member 13 to be able to detect the temperature of the conductive member 13 and the voltage of the battery cells 12, for example. Two (two or more) connectors 48 are mounted on the circuit board 17. The connectors 48 are, for example, LAN connectors (communication connectors). The connectors 48 are exposed from openings 42b1 in the end wall 42b of the intermediate member 42. The connectors 48 are each located between the two projections 11j, in other words, between the two connectors 15A and 15B. The connectors 48 are connected to, for example, LAN-cable connectors 32 (see FIG. 1). Via the LAN cable, for example, a control device receives a result of the detection of the circuit board 17, and controls the voltage of the battery cells 12.

Next, the connectors 15, the conductive members 14, and the projections 11j will be described in detail. The two conductive members 14, the two connectors 15, and the two projections 11j have the same structures. Thus, in the following, one (side wall 11d side, the front side in FIG. 2) each of the conductive members 14, the connectors 15, and the projections 11j will be mainly described.

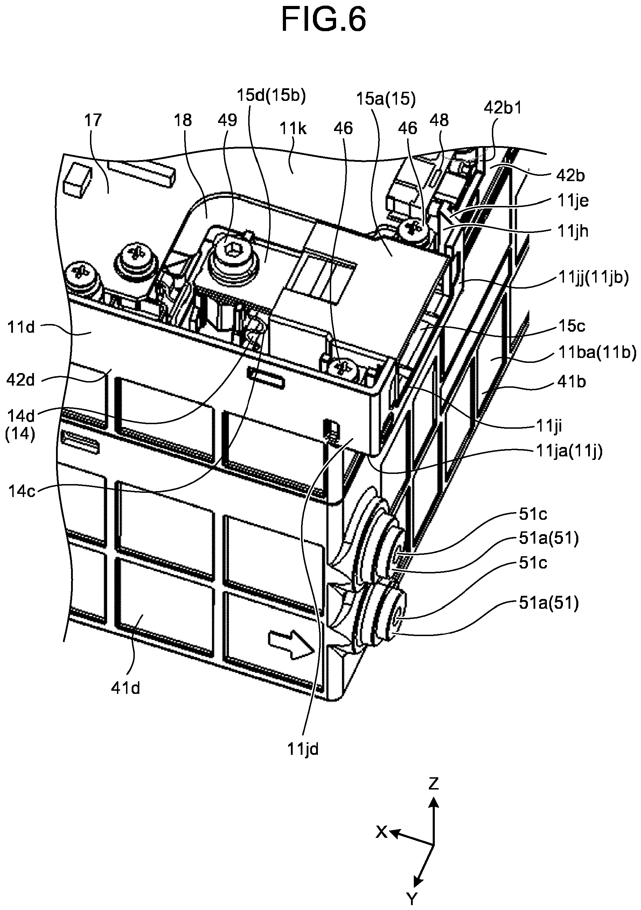

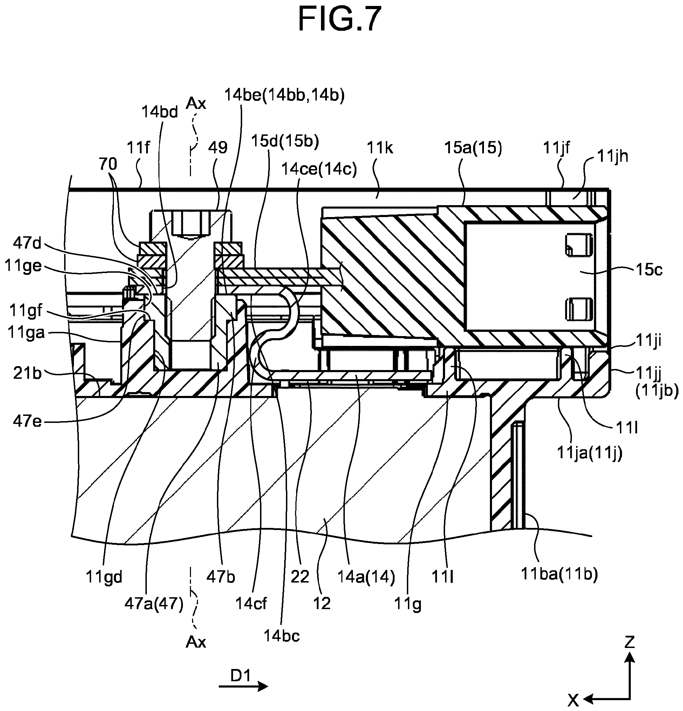

As illustrated in FIG. 6 and FIG. 7, the projection 11j includes a bottom wall 11 ja, an end wall 11jb, side walls 11jd and 11je, and a top wall 11jf. The bottom wall 11ja extends from the intermediate wall 11g. The side wall 11jd extends from the side wall 11d (side wall 42d). The side wall 11je is located opposite (side wall 11e side) the side wall 11jd with an interval in the Y direction. The top wall 11jf extends from the top wall 11f. The end wall 11jb is connected to the bottom wall 11ja, the side walls 11jd and 11je, and the top wall 11jf. In the other of the two projections 11j (side wall 11e side, far side in FIG. 2), the side wall 11je extends from the side wall 11e (side wall 42e), and the side wall 11jd is located in the Y direction (side wall 11d side) of the side wall 11je.

The projection 11j has an end face 11jj in a projecting direction (as an example, direction opposite to the X direction, rightward in FIG. 7). The end face 11jj forms the outer surface of the end wall 11jb. The projection 11j is provided with a chamber 11jh (space, chamber) inside. The chamber 11jh is open to the end face 11jj. The chamber 11jh includes an opening 11ji that penetrates through the end wall 11jb (end face 11jj). The chamber 11jh communicates with the chamber 11k.

In the present embodiment, the connector 15 is a female connector, and the external connector 100 is a male connector. The connector 15 includes an insulating body 15a and a conductive member 15b supported by the body 15a. The body 15a is provided with an opening 15c. The external connector 100 is inserted into the opening 15c to fit into the external connector 100. In the present embodiment, the direction of insertion (mount, fitting) of the external connector 100 into the connector 15 is an opposite direction (X direction) of the projecting direction of the projection 11j. In other words, the external connector 100 is moved in the opposite direction (X direction) of the projecting direction of the projection 11j and fitted into the connector 15. The body 15a is made of a synthetic resin material. FIG. 7 schematically illustrates the internal structure of the connector 15. The connector 15 may also be a male connector, and the external connector 100 may also be a female connector.

The conductive member 15b, while partially buried in the body 15a, is supported by the body 15a. The conductive member 15b is electrically connected to a terminal inside the body 15a. The terminal is electrically connected to a terminal of the external connector 100. The conductive member 15b includes a terminal 15d that projects from the body 15a oppositely to the opening 15c of the body 15a. The terminal 15d has a flat plate shape. The terminal 15d is electrically connected to the electrode terminal 22 via the conductive member 14. For example, the conductive member 15b is formed of an electrically conductive material such as aluminum. The conductive member 15b may also be referred to as a bus bar, a connection member, and a coupling member.

The chamber 11jh houses at least part of the connector 15, with the opening 15c exposed from the opening 11ji of the projection 11j, and the body 15a and the terminal 15d aligned along the thickness (X direction) of the end wall 11b. In the present embodiment, for example, the body 15a is partially housed in the chamber 11jh, and the rest of the body 15a and the terminal 15d are housed in the chamber 11k. The body 15a and the connector 15 may be entirely housed in the chamber 11jh. Both Y-directional sides of the body 15a are joined with at least one of the intermediate wall 11g and the bottom wall 11ja with the fasteners 46. The body 15a is pressed against a projection 111 projecting toward the connector 15 from the intermediate wall 11g and the bottom wall 11ja. That is, the body 15a is supported by the projection 111.

As illustrated in FIG. 7 to FIG. 9, the conductive member 14 includes two terminals 14a and 14b, a bridge 14c lying between the terminals 14a and 14b, and a connection tab 14i. The terminal 14a is an exemplary second terminal, and the terminal 14b is an exemplary first terminal.

The terminal 14a is electrically connected to the two electrode terminals 22 with the same polarity. The terminal 14a has a flat plate shape in a D1 direction (XY plane). The D1 direction is opposite the X direction. The terminal 14a includes two separate terminals 14aa, and the electrode terminal 22 is connected to both of the separate terminals 14aa. The separate terminals 14aa are each provided with a hole 14ab. The terminal 14a is placed on the electrode terminal 22 to weld (join) the electrode terminal 22 to the terminal 14a around the hole 14ab. The connection tab 14i extends from the edge of the terminal 14a. The connection tab 14i is connected to the circuit board 17. The separate terminals 14aa may also be referred to as walls.

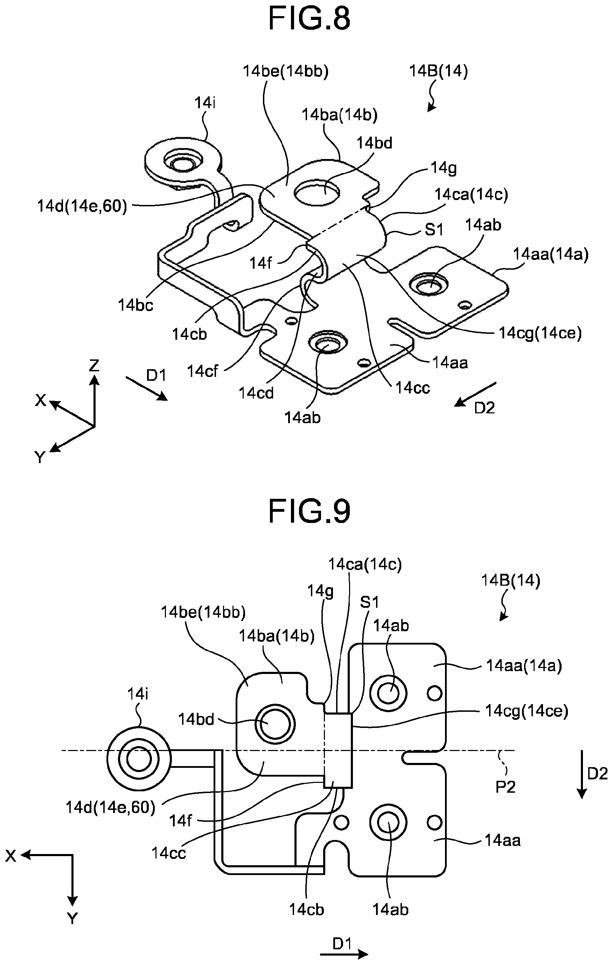

The terminal 14b is electrically connected to the connector 15. The terminal 14a and the terminal 14b are spaced apart from each other in the Z direction. The terminal 14b has a flat plate shape in the D1 direction (XY plane). The terminal 14b includes a single wall 14ba. The terminal 14b (wall 14ba) has two faces 14bb and 14bc. The face 14bb is at least partially laid on and contact the terminal 15d of the connector 15 (see FIG. 7). An area 14be, of the face 14bb, laid on and contacting the terminal 15d works for receiving and transmitting electricity from and to the connector 15. In FIG. 8 and FIG. 9, part of the end of the area 14be is indicated by an alternate long and short dash line. The terminal 14b is provided with a hole 14bd that penetrates through the faces 14bb and 14bc. A male screw member 49, which will be described below, is inserted into the hole 14bd (see FIG. 7).

The terminal 14a and the terminal 14b are offset in position from each other along the thickness (Z direction). The thickness direction intersects with the D1 direction.

The bridge 14c extends across the terminal 14b and the terminal 14a. The bridge 14c is plate-like and elastically deformable. The bridge 14c is fusible by heat including self-generated heat.

As illustrated in FIG. 8 and FIG. 9, the bridge 14c includes a pair of ends 14ca and 14cb, and a pair of faces 14cc and 14cd. The pair of ends 14ca and 14cb is both lateral ends of the bridge 14c, and extends longitudinally. In other words, the ends 14ca and 14cb extend across the terminal 14a and the terminal 14b. The pair of faces 14cc and 14cd extends across the ends 14ca and 14cb. The face 14cc is connected to the face 14bb, and the face 14cd is connected to the face 14bc.

The bridge 14c has a substantially S-shape including two (two or more) protruding parts 14ce and 14cf. The protruding parts 14ce and 14cf are located between the terminal 14a and the terminal 14b, and aligned in the Z direction. The protruding part 14ce is connected to the terminal 14b. The protruding part 14ce has a substantially U-shape (curved shape) with a convex bend with respect to the terminal 14b in the D1 direction and an opening oppositely to the D1 direction. The protruding part 14cf is connected to the terminal 14a. The protruding part 14cf is located between the protruding part 14ce and the terminal 14a, and has a substantially U-shape (curved shape) with a convex bend with respect to the terminal 14a in the D1 direction and an opening oppositely to the D1 direction. The protruding part 14cf is connected to the terminal 14a.

In the present embodiment, the tip of the protruding part 14ce serves as a fusion part 14cg. The fusion part 14cg extends across the end 14ca and the end 14cb, and is fused by heat including self-generated heat. The cross section (hereinafter, also referred to as a longitudinal cross section) of the fusion part 14cg along the width and thickness of the bridge 14c is smaller in area than the longitudinal cross section of the periphery of the fusion part 14cg. The difference in the cross section area occurs due to the extension of a plate member when bent into the protruding part 14ce. In the present embodiment, the longitudinal cross sections of the fusion part 14cg and of the tip of the protruding part 14cf are smaller than the longitudinal cross sections of the rest of the bridge 14c. Such a fusion part 14cg exhibits relatively high electrical resistance, so that when overcurrent flows, the fusion part 14cg generates heat and fuses. In other words, the bridge 14c (fusion part 14cg) functions as a fuse. The fusion part 14cg may also be referred to as a small cross-section part, a high resistance part, an expected fusing part, and a fusible part.

In the present embodiment, the bridge 14c and the terminal 14b are offset in position in the Y direction. As an example, the terminal 14b is placed closer to the end 14ca than to the end 14cb of the bridge 14c. This forms steps 14f and 14g on the connection between the terminal 14b and the bridge 14c.

The protruding parts 14ce and 14cf of the bridge 14c can function as an elastic part (spring). For example, the protruding parts 14ce and 14cf elastically deform when the terminal 15d vibrates in Z direction around the position of the connector 15 fixed with the fasteners 46. This can relieve stress concentration on the terminals 14a, 14b, and 15d and the electrode terminal 22. This can also eliminate the attachment tolerance of the conductive member 14. The protruding parts 14ce and 14cf may be shaped in other form than the U-shape (curved shape). For example, the protruding parts 14ce and 14cf may have a substantially V-shape. The conductive member 14 is formed of, for example, a conductive material such as aluminum. The conductive member 14 may also be referred to as a bus bar, a connection member, and a coupling member.

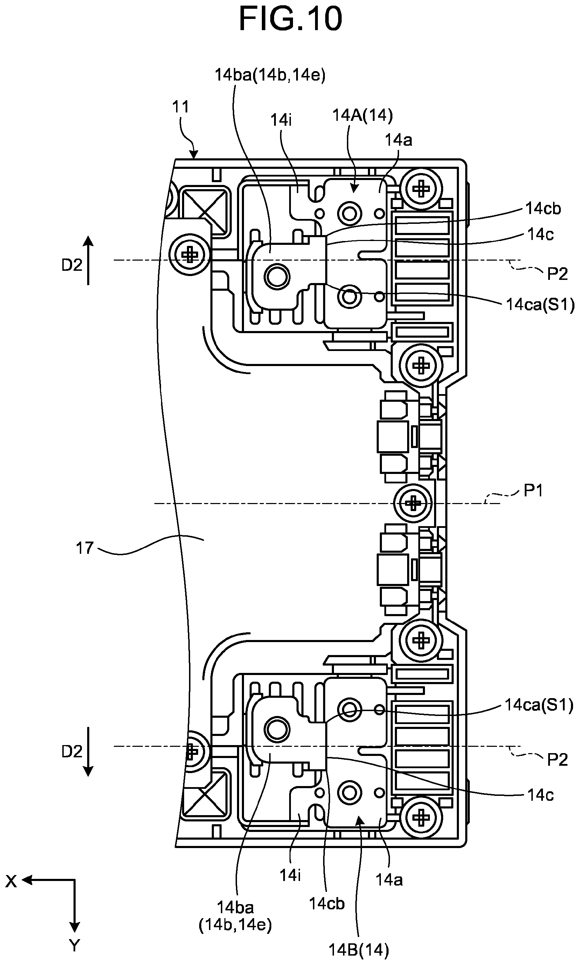

As illustrated in FIG. 10, conductive members 14A and 14B are plane symmetric with respect to a plane P1 that passes the Y-directional center of the housing 11 and is orthogonal to the Y direction. The conductive members 14A and 14B are placed in a posture with their ends 14ca facing the Y-directional center of the housing 11. Part of the circuit board 17 is located between the conductive members 14A and 14B. That is, the conductive member 14 is placed in a posture with the end 14ca facing the circuit board 17. The circuit board 17 is an exemplary electrical component.

As illustrated in FIG. 8 and FIG. 9, the conductive member 14 includes a heat transfer part 60. The heat transfer part 60 is configured to transfer heat such that the end 14ca of the bridge 14c becomes higher in temperature than the opposite end 14cb.

The heat transfer part 60 includes an asymmetrical part 14e included in a first part 14d that is of the conductive member 14 from the terminal 14b to the bridge 14c. The asymmetrical part 14e includes the terminal 14b. The asymmetrical part 14e is asymmetrical with respect to a plane P2 (see FIG. 9) that passes the lateral (Y-directional) center of the fusion part 14cg of the bridge 14c and is orthogonal to the lateral direction of the bridge 14c.

In the conductive member 14 configured as above, when overcurrent flows into the conductive member 14 from the connector 15 due to a short circuit outside the battery pack 1, for example, the fusion part 14cg is fused by heat including self-generated heat. Then, the heat is generated by electrical resistance between the terminal 14b and the terminal 15d of the connector 15 and transferred to the fusion part 14cg via the asymmetrical part 14e of the heat transfer part 60. Since the terminal 14b of the asymmetrical part 14e is placed closer to the end 14ca than to the end 14cb in the bridge 14c, heat is transferred in such a manner to raise the temperature of the end 14ca more than the temperature of the opposite end 14cb in the bridge 14c. Thereby, the end 14ca of the fusion part 14cg reaches a certain temperature earlier than the end 14cb and becomes a fusion start position S1 (see FIG. 8 and FIG. 9), and the fusion part 14cg starts fusing from the fusion start position S1. Thus, the fusing direction of the fusion part 14cg is from the end 14ca to the end 14cb. The fusion generates fumes which flow in the D2 direction and the fusing direction. The conductive member 14 is positioned with the end 14ca facing the circuit board 17. Thus, the fumes flow oppositely to the circuit board 17, that is, toward the side walls 11d and 11e. This can prevent the fumes from being scattered on the circuit board 17. The heat generated by electrical resistance between the terminal 14a and the electrode terminal 22 of the battery cell 12 is lower than the heat generated by electrical resistance between the terminal 14b and the terminal 15d of the connector 15. Thus, in the present embodiment, between the fusion part 14cg and the tip of the protruding part 14cf, the fusion part 14cg, which is closer to the terminal 14b and has higher temperature, is the one to fuse.

As illustrated in FIG. 7, the terminal 15d of the connector 15 and the terminal 14b of the conductive member 14 are coupled with a nut 47 and the male screw member 49. The nut 47 and the male screw member 49 are mutually connected and housed in the housing 11 (chamber 11k). Specifically, the terminal 15d of the connector 15, the terminal 14b of the conductive member 14, and a washer 70 are placed between the nut 47 and the male screw member 49 in the Z direction.

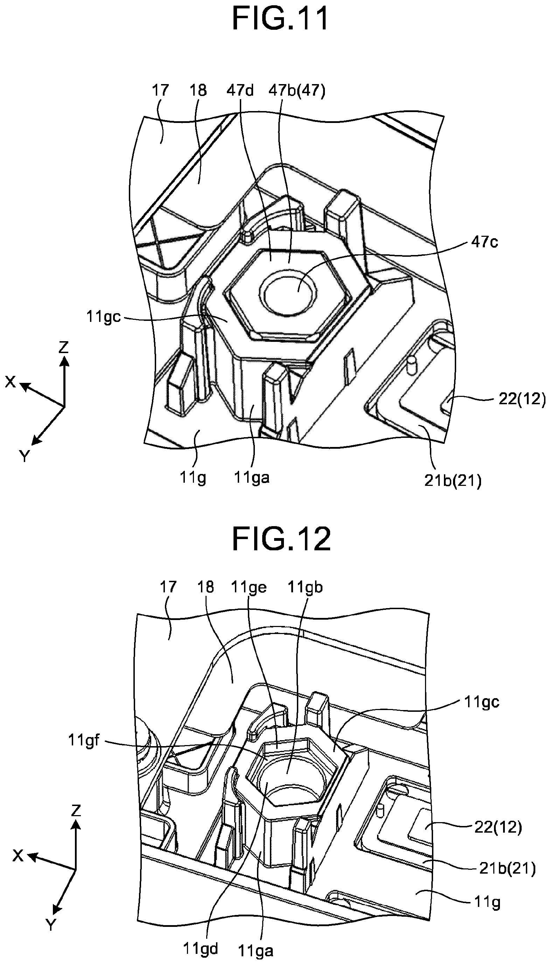

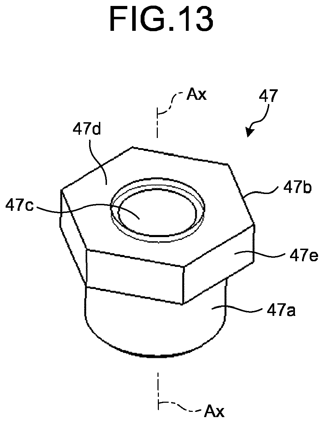

As illustrated in FIG. 11 and FIG. 13, the nut 47 includes a cylinder 47a into which the male screw member 49 is inserted, and a flange 47b. The cylinder 47a has an annular (for example, cylindrical) shape around an axis Ax. The axis Ax extends in the Z direction. The cylinder 47a is provided with a female screw 47c inside (inner periphery). The nut 47 may be, for example, formed of a metal material such as brass and iron. The surface of the nut 47 may be coated by nickel plating, for example.

The flange 47b protrudes radially outward from the Z-directional end of the cylinder 47a. The flange 47b includes a face 47d that forms the Z-directional end face of the nut 47. The terminal 14b of the conductive member 14 and the terminal 15d of the conductive member 15b are placed on the face 47d (see FIG. 7).

The flange 47b has a non-circular shape when viewed in the direction (Z direction) of the axis Ax. That is, when viewed in the direction of the axis Ax, an outer circumference 47e of the flange 47b around the axis Ax includes a plurality of parts which differs in distance from the axis Ax in a direction orthogonal to the axis Ax. In the present embodiment, for example, the flange 47b has a hexagonal (polygonal) shape when viewed in the direction of the axis Ax.

The nut 47 is movably supported by a support 11ga in the direction (Z direction) of the axis Ax. As illustrated in FIG. 7, FIG. 11, and FIG. 12, the support 11ga is placed on the intermediate wall 11g of the housing 11. The support 11ga is provided with an opening 11gb (through hole). The nut 47 is housed in the opening 11gb.

The support 11ga includes an end face 11gc in the projecting direction, and inner surfaces, i.e., surfaces 11gd, 11ge, and 11gf. The end including the face 47d of the nut 47 projects from the end face 11gc. The surfaces 11gd, 11ge, and 11gf face the opening 11gb. The surface 11gd has a shape (cylindrical shape) along the outer circumference of the cylinder 47a of the nut 47, to surround the cylinder 47a. The surface 11ge has a shape (non-circular such as hexagonal) along the outer circumference 47e of the flange 47b of the nut 47 to surround the outer circumference 47e. The surface 11gf is located between the surface 11gd and the surface 11ge, extending along the XY plane. The surface 11gf supports the flange 47b in one direction (Z direction) of the axis Ax.

The support 11ga configured as above movably supports the nut 47 in the direction (Z direction) of the axis Ax. The surface 11ge contacts the outer circumference 47e to restrict the rotation of the nut 47 around the axis Ax.

In the present embodiment, the support 11ga may be integrally formed with the intermediate member 42 by resin molding. Thus, the surface 11gd has a tapered shape with diameter (tube diameter) increasing toward the end face 11gc. In other words, the surface 11gd includes a draft. Meanwhile, the surface 11ge is constant in diameter. With such a configuration, it is possible to prevent shape defects in the support 11ga, and a decrease in the contact area between the surface 11gd and the outer circumference 47e of the flange 47b.

In the configuration above, as illustrated in FIG. 1, a cable 104 connected to the external connector 100, which is connected to the connector 15, extends along the end wall 11b toward a bottom end 11s of the end wall 11b. In other words, the cable 104 extends in a direction intersecting with the inserting direction (X direction) of the external connector 100 into the connector 15. There is a gap between the cable 104 and the outer surface 11ba of the end wall 11b.

As illustrated in FIG. 1, the battery pack 1 is fixed to the mount 103 with the brackets 101 and the bolts 102, for example. The mount 103 has, for example, a rectangular (quadrangular) plate shape that extends along the bottom wall 11a of the housing 11. The mount 103 may also be referred to as a support member, a heat radiating member, a tray member, a shelf member, and a slide member. The battery pack 1, the bracket 101, and the mount 103 are an exemplary battery unit. In the present embodiment, for example, two or more battery units may be arranged in the Y direction in the same posture. The mount 103 is an exemplary support member.

The brackets 101 each include a bottom wall 101a and a vertical wall 101b, for example. The bottom wall 101a has a quadrangular plate shape that extends along the mount 103. As illustrated in FIG. 2, the bottom wall 101a is provided with openings 101c through which the bolts 102 penetrate. The vertical wall 101b has a rectangular plate shape that extends along the end walls 11b and 11c of the housing 11, and is connected to the end of the bottom wall 101a on the end walls 11b and 11c side. The vertical wall 101b is provided with openings 101d through which the bolts 102 penetrate. As viewed in the Y direction, the bracket 101 has a substantially L-shape of the bottom wall 101a and the vertical wall 101b in connection. The bracket 101 is an exemplary support member, and may also be referred to as an attaching member, and a fixing member.

Then, as illustrated in FIG. 2 and FIG. 6, the end walls 11b and 11c of the housing 11 are each provided with a plurality of nuts 51. The nuts 51 each include a second screw 51c (see FIG. 3) that is connectable to a first screw 102a (see FIG. 2) of the bolt 102. The first screw 102a is a male screw on the outer surface of the shaft of the bolt 102. The second screw 51c is a female screw on the inner surface of a cylinder 51a of the nut 51. The nuts 51 are integrally formed with the housing 11 by insert molding, for example. The nuts 51 are fixed to the end walls 11b and 11c while at least the second screws 51c are exposed to the outside of the housing 11. In the present embodiment, the nuts 51, while placing the vertical wall 101b (see FIG. 1) therebetween, are coupled to the bolts 102, whereby the housing 11 101 is supported by (fixed to) the mount 103. Also, the nuts 51 located on the rear side of the mount 103, while placing the vertical wall 101b (see FIG. 1) therebetween, are coupled to the bolts 102, thereby fixing the bracket 101 to the mount 103. With such a configuration, the housing 11 (battery pack 1) is fixed to the mount 103 via the brackets 101. The brackets 101 and the bolts 102 are an exemplary fixing structure. the bolts 102 that couple the bottom wall 101a to the mount 103 may be screws.

The housing 11 may include a sheet-like heat transfer member between the bottom wall 11a and the mount 103. The heat transfer member is, for example, made of a synthetic resin material containing thermally conductive filler (metal material). When the bracket 101 is attached to the housing 11, the bottom surface of the bottom wall 11a and the bottom surface of the bottom wall 101a are mutually aligned on the same plane. In the present embodiment, for example, the bolt 102 and the nut 51 are coupled together, while the two bottom walls 101a aligned in the X direction are pressed onto the mount 103, thereby compressing the heat transfer member in the Z direction between the bottom wall 11a and the mount 103. This makes the bottom wall 11a and the heat transfer member as well as the heat transfer member and the mount 103 closely contact each other easily. That is, for example, the heat from the battery cells 12 contained in the housing 11 is more effectively transferred to the mount 103 via the bottom wall 11a and the heat transfer member. The heat transfer member is not limited to the heat transfer sheet, and may also be grease and an adhesive, for example.

As described above, in the present embodiment, for example, the first part 14d (first part) of the conductive member 14 from the terminal 14b (first terminal) to the bridge 14c is provided with the heat transfer part 60. The heat transfer part 60 transfers heat so that the end 14ca becomes higher in temperature than the end 14cb in the bridge 14c. Thus, the fusion part 14cg of the conductive member 14 starts fusing at the end 14ca (fuse start position S1) which has reached a certain temperature earlier than the end 14cb. In this manner, according to the present embodiment, fusing can start from a specific location (end 14ca).

In the present embodiment, the conductive member 14 includes the fusion part 14cg that extends across the terminal 14b and the terminal 14a and is fused by the heat including self-generated heat, for example. The heat transfer part 60 includes the asymmetrical part 14e included in the first part 14d and having an asymmetrical shape with respect to the plane P2. According to the present embodiment, thus, owing to the shape of the conductive member 14, heat is transferred so that the temperature of the end 14ca exceeds the temperature of the end 14cb in the bridge 14c. This eliminates the necessity for the heat transfer part 60 to include an additional member other than the conductive member 14, which can simplify the configuration of the heat transfer part 60.

In the present embodiment, for example, the terminal 14b is placed closer to the end 14ca than to the end 14cb. According to the present embodiment, it is hence unnecessary to form the bridge 14c in an asymmetrical shape with respect to the plane P2, which can simplify the shape of the bridge 14c.

Further, in the present embodiment, for example, the connector 15 (first connector) is attached to the projection 11j. That is, according to the present embodiment, the location of the connector 15 is easily recognizable, for example. Also, a work for connecting the external connector 100 (second connector) to the connector 15 is facilitated, for example. In addition, the cable 104 connected to the external connector 100 can be prevented from coming into contact with the outer surface 11ba of the end wall 11b, for example. Also, the cable 104 can be more flexibly set, for example.

In the present embodiment, for example, the support 11ga movably supports the nut 47 in the direction of the axis Ax of the nut 47 (first nut). Thus, according to the present embodiment, upon receiving a load due to vibrations occurring during assembly of the battery pack 1 or from a movable structure such as a vehicle incorporating the battery pack 1, the conductive members 14 and 15b are movable together with the nut 47. Thereby, the stress concentration on the terminals 14a, 14b, and 15d of the conductive members 14 and 15b can be relieved. Even with variations in the arrangements of the connector 15 and the battery cells 12, the movement of the nuts 47 can eliminate the variations.

### Other Embodiments

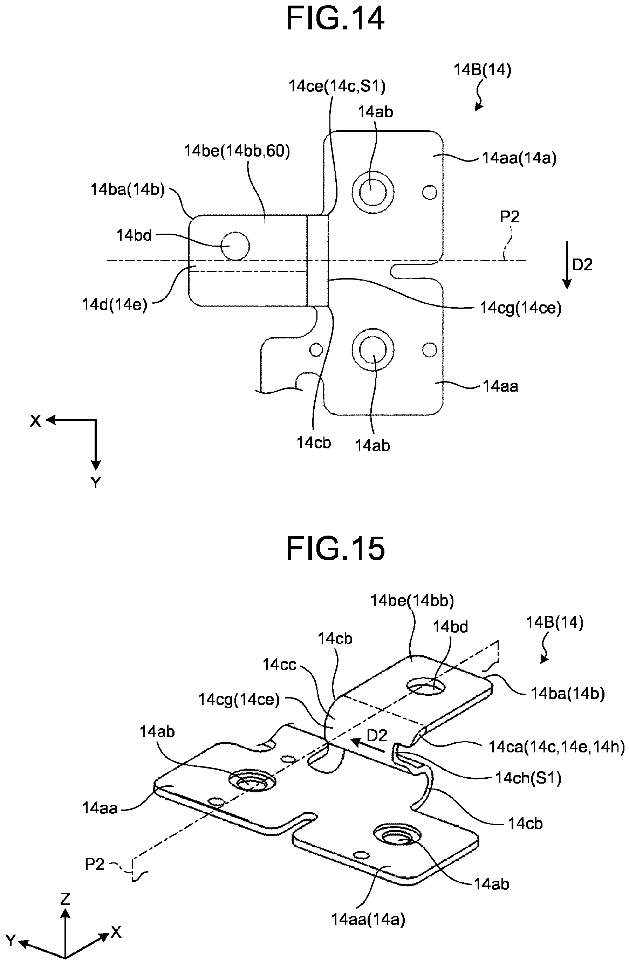

Next, second to eighth embodiments illustrated in FIG. 14 to FIG. 23 will be described. Battery packs of the second to eighth embodiments have the same features as the battery pack 1 in the first embodiment. Thus, the second to eighth embodiment can also attain the same results (effects) as the first embodiment on the basis of the same features. In the following, a difference in features between the battery packs in the second to eighth embodiments and that of the first embodiment will be mainly described.

### Second Embodiment

The conductive member 14 of the second embodiment, as illustrated in FIG. 14, includes the area 14be for receiving and transmitting electricity from and to the connector 15 of the terminal 14b. The area 14be is located closer to the end 14ca than to the end 14cb. In FIG. 14, part of the end of the area 14be is indicated by the alternate long and short dash line away from the plane P2. The area 14be is included in the heat transfer part 60. In such a configuration, a larger amount of heat, when generated by energization in the area 14be, is transferred to the end 14ca than to the end 14cb, therefore, the fusing starts at the end 14ca.

### Third Embodiment

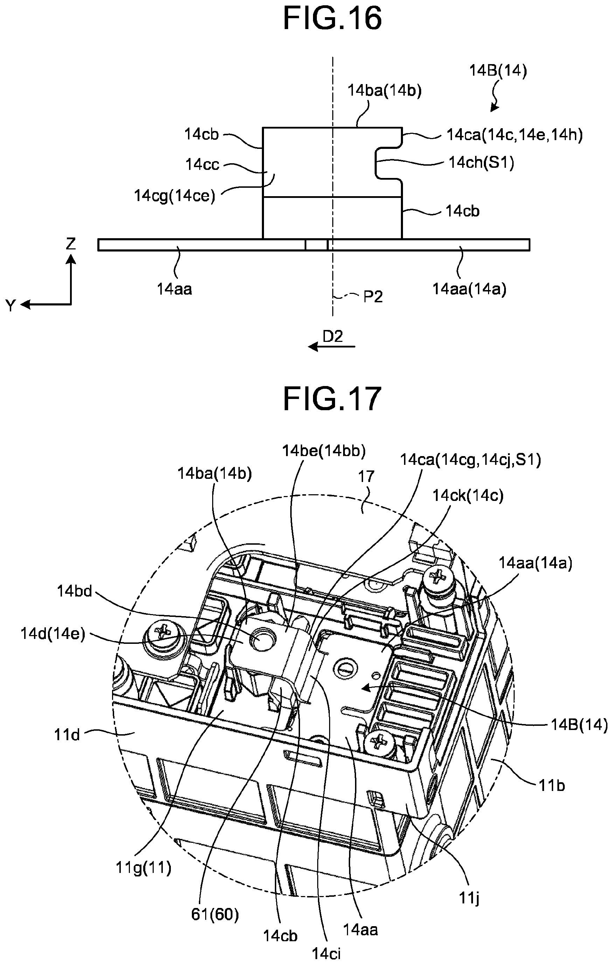

In the conductive member 14 of the third embodiment illustrated in FIG. 15 and FIG. 16, the end 14ca of the bridge 14c of the terminal 14b is provided with a recess 14ch. The recess 14ch is recessed in the lateral direction of the bridge 14c. The asymmetrical part 14e includes the terminal 14b, and a second part 14h of the bridge 14c between the terminal 14b and the recess 14ch. In such a configuration, a larger amount of heat, when generated in the area 14be by energization, is transferred to the end 14ca than to the end 14cb, therefore, the fusing starts at the end 14ca.

### Fourth Embodiment

The bridge 14c of the conductive member 14 of the fourth embodiment, illustrated in FIG. 17 to FIG. 19, includes two curved parts 14ci and 14cj and a wall 14ck. The curved part 14ci is connected to the terminal 14a. The curved part 14cj is connected to the terminal 14b. The wall 14ck lies between the two curved parts 14ci and 14cj. The wall 14ck has a flat plate shape. In the present embodiment, the curved part 14cj serves as the fusion part 14cg. In other words, the fusion part 14cg includes the curved part 14cj.

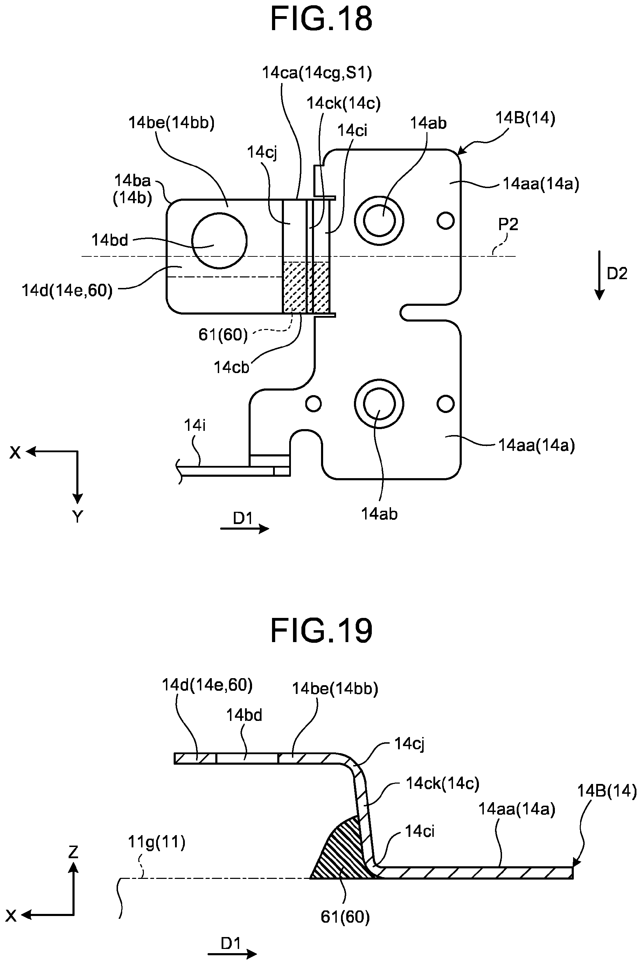

The heat transfer part 60 includes a radiator 61. The radiator 61 is made of a thermoplastic synthetic resin material and the like. The radiator 61 may also be thermally flexible elastomer. The radiator 61 is located between the first part 14d of the bridge 14c and the housing 11, and is connected to the housing 11. For easier understanding, FIG. 18 shows the radiator 61 hidden by the bridge 14c by hatching. The radiator 61 is placed closer to the end 14cb than to the end 14ca in the bridge 14c. In such a configuration, heat, when generated in the conductive member 14 by energization, is transferred to the radiator 61 via the housing 11. When an increased amount of heat is transferred to the radiator 61 due to overcurrent, and the radiator 61 is melted, the radiator 61 comes into contact with a part of the bridge 14c (first part 14d) closer to the end 14cb than to the end 14ca. Thereby, the radiator 61 radiates the heat of the part of the bridge 14c on the end 14cb side to the housing 11, thereby lowering the temperature of the part. That is, the temperature of the end 14ca is relatively higher than the temperature of the end 14cb. Thus, the fusing starts at the end 14ca of the fusion part 14cg. The radiator 61 may be connected to the bridge 14c before being melted. The radiator 61 is an exemplary first radiator.

### Fifth Embodiment

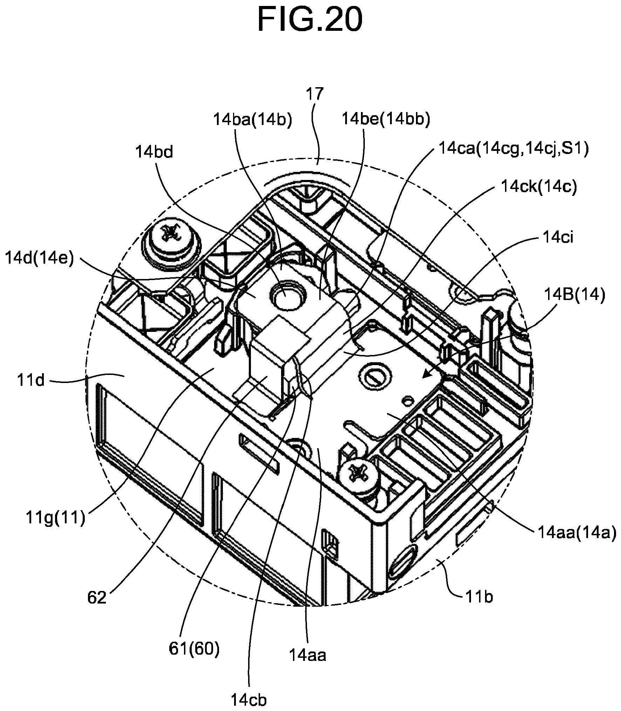

The conductive member 14 of the fifth embodiment illustrated in FIG. 20 is identical to that in the fourth embodiment. The heat transfer part 60 includes a radiator 61 and a radiator 62. The radiator 61 has the same configuration as that in the fourth embodiment. The radiator 62 is made of an adhesive tape. The radiator 62 extends across the first part 14d (first part) of the bridge 14c and the housing 11, and is connected (adhered) to the first part 14d of the bridge 14c and the housing 11. The radiator 62 is placed closer to the end 14cb than to the end 14ca in the bridge 14c. In such a configuration, a larger amount of heat, when generated in the area 14be by energization, is transferred to the end 14ca than to the end 14cb. Thus, the fusing starts at the end 14ca of the fusion part 14cg. The radiator 62 is an exemplary second radiator.

### Sixth Embodiment

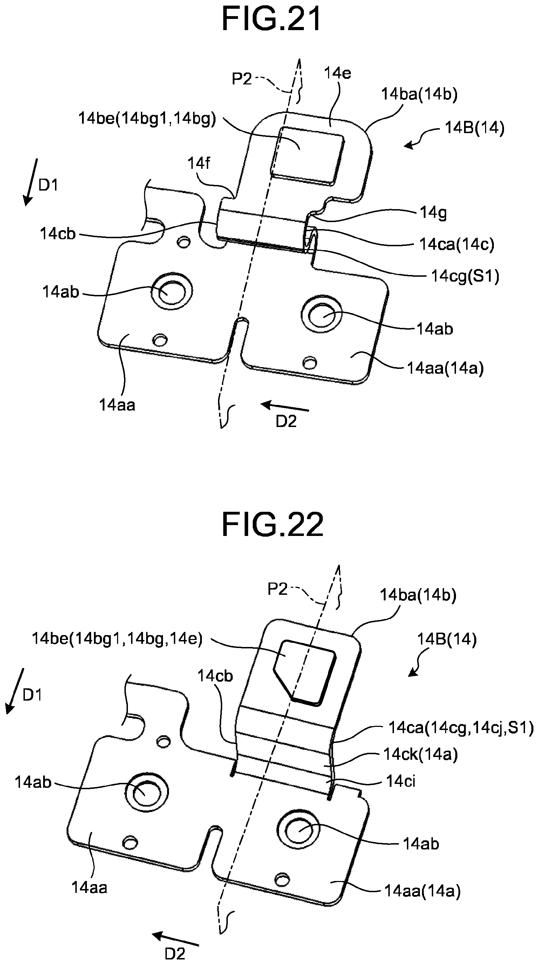

The conductive member 14 of the sixth embodiment, illustrated in FIG. 21, includes a terminal 14b including the wall 14ba and a projection 14bg. The projection 14bg projects from the wall 14ba. In the sixth embodiment, an end face 14bg1 of the projection 14bg is connected to the terminal 15d of the connector 15. That is, in the present embodiment, substantially the entire end face 14bg1 serves as the area 14be for receiving and transmitting electricity from and to the connector 15. The projection 14bg and the terminal 15d are joined together by welding or ultrasonic welding, for example. The projection 14bg (terminal 14b) has an asymmetrical shape with respect to the plane P2. The projection 14bg is located closer to the end 14ca than to the end 14cb. The asymmetrical part 14e includes the projection 14bg (terminal 14b). In such a configuration, a larger amount of heat, when generated in the area 14be by energization, is transferred to the end 14ca than to the end 14cb. Thereby, the fusing starts at the end 14ca of the fusion part 14cg.

### Seventh Embodiment

As with the fourth embodiment, the bridge 14c of the conductive member 14 of the seventh embodiment, illustrated in FIG. 22, includes the two curved parts 14ci and 14cj, and the wall 14ck. As with the sixth embodiment, the terminal 14b of the conductive member 14 of the seventh embodiment includes the wall 14ba and the projection 14bg. However, in the present embodiment, the wall 14ba has a symmetrical shape with respect to the plane P2, and the projection 14bg has a polygonal shape asymmetrical with respect to the plane P2. The projection 14bg is placed closer to the end 14ca than to the end 14cb. The asymmetrical part 14e includes the projection 14bg (terminal 14b). In such a configuration, a larger amount of heat, when generated in the area 14be by energization, is transferred to the end 14ca than to the end 14cb. Thereby, the fusing starts at the end 14ca of the fusion part 14cg.

### Eighth Embodiment

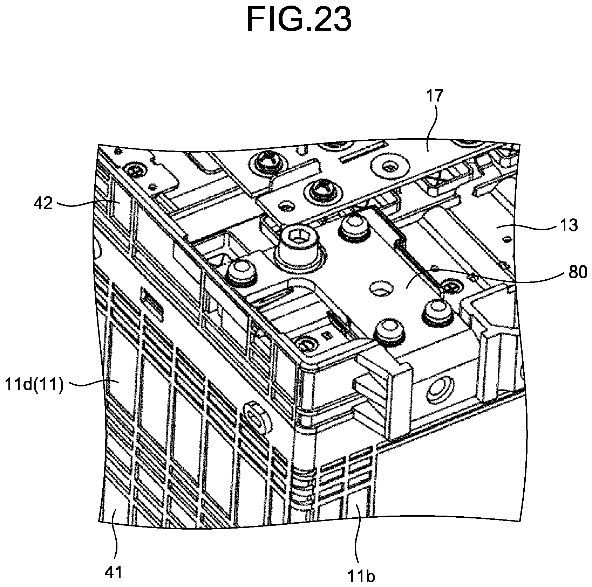

The eighth embodiment illustrated in FIG. 23 includes a terminal block 80 instead of the connector 15 in the first embodiment. The terminal block 80 is connected to the conductive member 14 and an external connection member (not illustrated).

Any two or more components in the first to eighth embodiments can be combined in a technically feasible manner.

The embodiments of the present invention have been described above. However, the above embodiments are merely exemplary and are not intended to limit the scope of the invention.

## Claims

1. A battery pack (1), comprising:
a plurality of battery cells (12) that each include an electrode terminal (22A, 22B);
a connection member (15; 15A, 15B);
a conductive member (14; 14A, 14B) that includes:
a first terminal (14b) of a plate shape, connected to the connection member,
a second terminal (14a) of a plate shape, connected to the electrode terminal, and
a bridge (14c) located between the first terminal (14b) and the second terminal (14a) and is fused by heat including self-generated heat; and
a heat transfer part (60) that is located in a first part (14d) of the conductive member from the bridge to the first terminal,
**characterized in that**
the heat transfer part transfers heat so that a first end (14ca) becomes higher in temperature than a second end (14cb) in the bridge (14c), the first end being a lateral end of the bridge, the second end being opposite the first end,
wherein
the conductive member (14; 14A, 14B) includes a fusion part (14cg) that extends across the first end (14ca) and the second end (14cb), and that is fused by heat including self-generated heat; wherein
the heat transfer part (60) includes an asymmetrical part (14e) that is included in the first part (14d) being from the first terminal (14b) to the bridge (14c) of the conductive member, and that has an asymmetrical shape with respect to a plane (P2) which passes a lateral center of the fusion part (14cg) and is orthogonal to the lateral direction, and
the first terminal (14b) is placed closer to the first end (14ca) than to the second end (14cb), whereby the first end (14ca) of the fusion part (14cg) reaches a certain temperature earlier than the second end (14cb) and becomes a fusion start position and the fusing direction of the fusion part (14cg) is from the end (14ca) to the end (14cb), and
the asymmetrical part (14e) includes the first terminal (14b) and wherein the first terminal (14b) has an asymmetrical shape with respect to a plane (P2).

2. The battery pack (1) according to claim 1, further comprising
an electrical component (17), wherein
the conductive member (14; 14A, 14B) is placed in a posture with the first end (14ca) facing the electrical component.

## Patentansprüche

1. Akku (1), der Folgendes umfasst:
mehrere Batteriezellen (12), die jeweils einen Elektrodenanschluss (22A, 22B) umfassen;
ein Verbindungselement (15; 15A, 15B);
ein leitfähiges Element (14; 14A, 14B), das Folgendes umfasst:
einen ersten Anschluss (14b) mit einer Plattenform, der mit dem Verbindungselement verbunden ist,
einen zweiten Anschluss (14a) mit einer Plattenform, der mit dem Elektrodenanschluss verbunden ist, und
eine Brücke (14c), die sich zwischen dem ersten Anschluss (14b) und dem zweiten Anschluss (14a) befindet und durch Wärme, die selbst erzeugte Wärme umfasst, geschmolzen ist; und
einen Wärmeübertragungsteil (60), der sich in einem ersten Teil (14d) des leitfähigen Elements von der Brücke zum ersten Anschluss befindet,
**dadurch gekennzeichnet, dass**
der Wärmeübertragungsteil Wärme derart überträgt, dass die Temperatur eines ersten Endes (14ca) höher wird als die eines zweiten Endes (14cb) in der Brücke (14c), wobei das erste Ende ein seitliches Ende der Brücke ist, wobei das zweite Ende dem ersten Ende entgegengesetzt ist, wobei
das leitfähige Element (14; 14A, 14B) einen Schmelzteil (14cg) umfasst, der sich durch das erste Ende (14ca) und das zweite Ende (14cb) erstreckt und der durch Wärme, die selbst erzeugte Wärme umfasst, geschmolzen ist; wobei
der Wärmeübertragungsteil (60) einen asymmetrischen Teil (14e) umfasst, der in dem ersten Teil (14d) enthalten ist, der von dem ersten Anschluss (14b) zur Brücke (14c) des leitfähigen Elements vorhanden ist, und der eine in Bezug auf eine Ebene (P2), die eine seitliche Mitte des Schmelzteils (14cg) durchquert und orthogonal zur seitlichen Richtung ist, asymmetrische Form aufweist, und
der erste Anschluss (14b) näher am ersten Ende (14ca) als am zweiten Ende (14cb) platziert ist, wobei das erste Ende (14ca) des Schmelzteils (14cg) eine gewisse Temperatur früher erreicht als das zweite Ende (14cb) und eine Schmelzanfangsposition wird und die Schmelzrichtung des Schmelzteils (14cg) vom Ende (14ca) zum Ende (14cb) verläuft, und
der asymmetrische Teil (14e) den ersten Anschluss (14b) umfasst und wobei der erste Anschluss (14b) eine in Bezug auf eine Ebene (P2) asymmetrische Form aufweist.

2. Akku (1) nach Anspruch 1, der ferner Folgendes umfasst:
ein elektrisches Bauteil (17), wobei
das leitfähige Element (14; 14A, 14B) in einer Stellung mit dem ersten Ende (14ca) dem elektrischen Bauteil zugewandt platziert ist.

## Revendications

1. Bloc-batterie (1), comprenant :
une pluralité de cellules de batterie (12) qui incluent chacune une borne d'électrode (22A, 22B) ;
un élément de liaison (15 ; 15A, 15B) ;
un élément conducteur (14 ; 14A, 14B) qui inclut :
une première borne (14b) en forme de plaque, reliée à l'élément de liaison,
une deuxième borne (14a) en forme de plaque, reliée à la borne d'électrode, et
un pont (14c) situé entre la première borne (14b) et la deuxième borne (14a) et est fondu par une chaleur incluant une chaleur autogénérée ; et
une partie de transfert de chaleur (60) qui est située dans une première partie (14d) de l'élément conducteur depuis le pont jusqu'à la première borne,
**caractérisé en ce que**
la partie de transfert de chaleur transfère une chaleur de sorte qu'une première extrémité (14ca) devienne supérieure en température à une deuxième extrémité (14cb) dans le pont (14c), la première extrémité étant une extrémité latérale du pont, la deuxième extrémité étant à l'opposé de la première extrémité,
dans lequel
l'élément conducteur (14 ; 14A, 14B) inclut une partie de fusion (14cg) qui s'étend à travers la première extrémité (14ca) et la deuxième extrémité (14cb), et qui est fondue par une chaleur incluant une chaleur autogénérée ; dans lequel
la partie de transfert de chaleur (60) inclut une partie asymétrique (14e) qui est incluse dans la première partie (14d) étant depuis la première borne (14b) jusqu'au pont (14c) de l'élément conducteur, et qui présente une forme asymétrique par rapport à un plan (P2) qui passe par un centre latéral de la partie de fusion (14cg) et est orthogonal à la direction latérale, et
la première borne (14b) est placée plus près de la première extrémité (14ca) que de la deuxième extrémité (14cb), de telle manière que la première extrémité (14ca) de la partie de fusion (14cg) atteigne une certaine température plus tôt que la deuxième extrémité (14cb) et devienne une position de début de fusion et la direction de fusion de la partie de fusion (14cg) est depuis l'extrémité (14ca) jusqu'à l'extrémité (14cb), et
la partie asymétrique (14e) inclut la première borne (14b) et dans lequel la première borne (14b) présente une forme asymétrique par rapport à un plan (P2).

2. Bloc-batterie (1) selon la revendication 1, comprenant en outre
un composant électrique (17), dans lequel
l'élément conducteur (14 ; 14A, 14B) est placé dans une posture avec la première extrémité (14ca) orientée vers le composant électrique.
